Europäisches Patentamt

European Patent Office

Office européen des brevets

(19)

(11) Numéro de publication: **0 165 206**
**B1**

(12) **FASCICULE DE BREVET EUROPEEN**

(45) Date de publication du fascicule du brevet:
30.03.88

(21) Numéro de dépôt: **85810197.5**

(22) Date de dépôt: **01.05.85**

(51) Int. Cl.⁴: **A 44 C 5/10,** G 02 C 5/22,
F 16 B 21/18

(54) **Dispositif d'assemblage rotatif à goupille.**

(30) Priorité: **16.05.84 CH 2411/84**

(43) Date de publication de la demande:
**18.12.85 Bulletin 85/51**

(45) Mention de la délivrance du brevet:
**30.03.88 Bulletin 88/13**

(84) Etats contractants désignés:
**AT BE CH DE FR GB IT LI LU NL SE**

(56) Documents cités:
**CH - A - 246 068**
**CH - A - 631 880**
**DE - A - 1 120 195**
**DE - A - 2 009 639**
**FR - A - 1 595 305**
**FR - A - 2 086 615**
**FR - A - 2 389 794**
**GB - A - 901 280**
**US - A - 4 145 124**

(73) Titulaire: **NOVAVIT S.A., 47 route des Jeunes,
CH-1227 Carouge (CH)**

(72) Inventeur: **Lenherr, Jean-Claude, 3 route du Bois-des
Frères, CH-1219 Le Lignon (CH)**

(74) Mandataire: **Vuille, Roman et al, c/o KIRKER & Cie
S.A. 14, rue du Mont-Blanc Case Postale 872,
CH-1211 Genève 1 (CH)**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Beschreibung

On connaît de nombreux types de bracelets, notamment de bracelets pour montres, qui sont formés de plusieurs rangées de maillons parallèles ou approximativement parallèles et de goupilles servant à la fois d'organes de liaison et d'organes d'articulation des maillons des différentes rangées. Pour assurer le maintien en place des goupilles dans les maillons, on a utilisé divers moyens qui ont tous des inconvénients. Ainsi, par exemple, on a proposé de dimensionner très exactement le diamètre des goupilles et le diamètre intérieur des trous des maillons dans lesquels ces goupilles doivent être engagées à demeure, de sorte que ces goupilles puissent être «chassées» c'est-à-dire forcées dans les trous des maillons des deux rangées marginales, afin de s'y fixer solidement, tandis que les maillons intermédiaires peuvent tourner avec jeu autour de ces goupilles. Toutefois, une telle construction a trois inconvénients: D'abord elle est coûteuse en raison de la précision exigée dans la fabrication des goupilles et des trous des maillons. Ensuite, malgré cette précision, il arrive à la longue que ces goupilles quittent le logement dans lequel elles ont été forcées, d'où rupture du bracelet. Enfin, le montage des maillons, ainsi que l'adaptation de la longueur du bracelet au tour de poignet d'un usager (par enlèvement ou intercalation de maillons et de goupilles) exige l'emploi d'un appareil spécial. Le préambule de la revendication 1 est basé sur cet état de la technique.

On a aussi prévu que les goupilles soient vissées par une extrémité dans les maillons d'une des rangées marginales, mais on sait que, sous l'effet des mouvements du poignet, de secousses, de vibration et d'autres mouvements, il y a tendance, à la longue, au dévissage des goupilles.

On a encore proposé d'immobiliser les goupilles en position de travail par soudage ou brassage aux maillons, mais la soudure ou la brasure s'altère sous l'action corrosive de la sueur, ce qui à la longue provoque la rupture du bracelet. Tous les moyens proposés jusqu'ici sont ou compliqués et coûteux, ou pas assez sûrs.

Dans le brevet français No 1 595 305, on a proposé de réaliser des assemblages par coopération d'une pièce mâle et une pièce femelle, en prévoyant une pièce mâle comportant une gorge transversale périphérique munie d'une surface de coincement inclinée et dans laquelle gorge est disposé un joint élastique de section circulaire. Mais une telle construction ne permet le mouvement relatif des pièces mâle et femelle que dans un sens seulement, celui dans lequel on assemble ces pièces. Elle ne permet pas de réaliser des assemblages facilement démontables et remontables de pièces articulées entre elles.

La présente invention vise à fournir un dispositif d'assemblage rotatif à goupille d'au moins deux pièces articulées entre elles et pouvant être utilisé pour réaliser des bracelets, des charnières ou autres objets, qui soit exempt des inconvénients mentionnés, c'est-à-dire qui permette une fabrication bon marché (parce que simple et n'exigeant pas une haute précision), une mise en place et un démontage faciles et, surtout, qui assure le maintien de chaque goupille en position de travail, malgré les mouvements, chocs, vibrations, etc. auxquels le dispositif peut être soumis. Cette invention a pour objet un dispositif qui est conforme à la revendication 1.

Les dessins annexés représentent, à titre d'exemples, quelques formes d'exécution du dispositif selon l'invention.

Les fig. 1 et 2 sont deux vues en perspective de deux portions de bracelet de montre de types connus, avant assemblage des maillons.

La fig. 3 est une vue en coupe transversale, à grande échelle, de la première forme d'exécution, qui constitue un bracelet formé de maillons du type selon la fig. 1.

La fig. 4 est une vue en perspective, avant assemblage des maillons, d'une deuxième forme d'exécution du dispositif selon l'invention, dans le cas d'un bracelet à cinq rangées de mailles rectangulaires.

La fig. 5 est une vue en coupe d'une troisième forme d'exécution du dispositif, constituant une charnière de lunette.

Les fig. 6 et 7 illustrent deux autres formes d'exécution.

La fig. 8 est une variante de la forme d'exécution selon fig. 3.

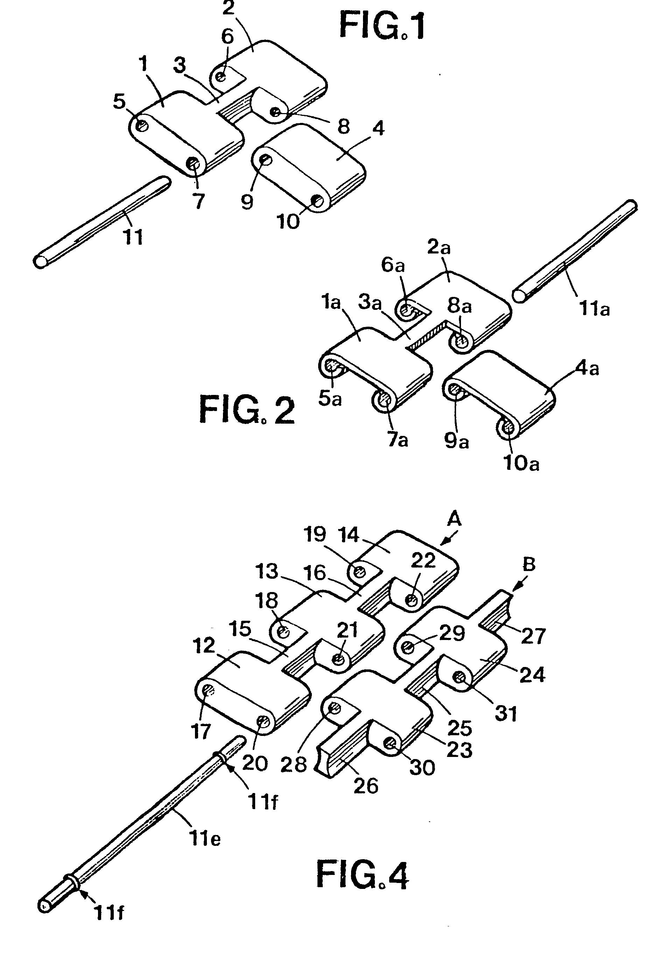

Le bracelet de type connu dont la fig. 1 illustre deux éléments et une goupille, avant leur assemblage, comprend trois rangées parallèles de maillons massifs rectangulaires formées par l'assemblage d'organes tels que représentés sur cette figure. On voit en 1 et 2 deux maillons massifs reliés rigidement entre eux par un pont 3 et destinés à former, avec d'autres éléments identiques, les deux rangées marginales d'un bracelet à maillons rectangulaires articulés. Les maillons 1 et 2 sont distants l'un de l'autre pour permettre l'insertion entre eux, avec un léger jeu, d'un maillon intermédiaire analogue 4. Pour l'assemblage des maillons 1, 2 et 4, il est prévu les moyens suivants: les maillons 1 et 2 sont percés de deux trous identiques et alignés 5, 6, et symétriquement, de deux autres trous identiques et alignés 7, 8. Le maillon intermédiaire 4 est percé de deux trous 9, 10, disposés de façon qu'en position de travail, l'axe du trou 9 coïncide avec l'axe commun des trous 7, 8, et que l'axe du trou 10 coïncide avec l'axe commun de deux trous homologues de 5, 6, pratiqués sur deux autres maillons identiques à 1 et 2.

Pour maintenir ensemble les maillons 1, 2, d'une part, et le maillon 4, d'autre part, on engage dans les trous alignés 7, 9, 8, une goupille 11. Pour assurer que cette goupille restera en place malgré les mouvements, secousses, vibrations, chocs, auxquels les maillons peuvent être soumis après assemblage, on prévoit le plus souvent que les trous 7, 8 (ainsi que les trous 5, 6) sont pratiqués avec une grande précision, et que la goupille est aussi dimensionnée très exactement, en diamètre, tandis que les trous 9 et 10 du maillon intermédiaire sont prévus pour laisser passer à travers eux, avec jeu, une goupille telle que 11.

Ainsi, on peut chasser, c'est-à-dire forcer la goupille 11 en place dans les trous 7, 8, tandis qu'elle passe librement dans le trou 9, ce qui fait que le maillon 4 est articulé aux maillons jumeaux 1, 2, grâce à la goupille 11 qui forme alors pivot. Le démontage n'est possible, pour enlever des maillons ou en intercaler, une fois l'assemblage terminé, pour permettre l'adaptation au poignet d'une personne quelconque, qu'au moyen d'un outillage spécial.

La fig. 2 illustre le cas d'une construction connue qui diffère de celle selon fig. 1 par le fait que les maillons 1a, 2a et le pont 3a, sont faits à partir d'une plaque métallique et non d'une pièce massive. Les trous 5a, 6a, 7a, 8a sont réalisés par enroulement du métal.

De même, le maillon intermédiaire 4a n'est pas massif mais est fait à partir d'une plaquette métallique dont les extrémités de la goupille 11a.

Cette construction n'est pas plus sûre que celle selon la fig. 1, elle exige une opération de serrage, qui rend difficile l'ajustement correct de la longueur du bracelet au poignet d'une personne, par enlèvement ou intercalation d'un ou plusieurs maillons, c'est-à-dire en assurant le maintien ferme en place des goupilles ajoutées ou remises en place.

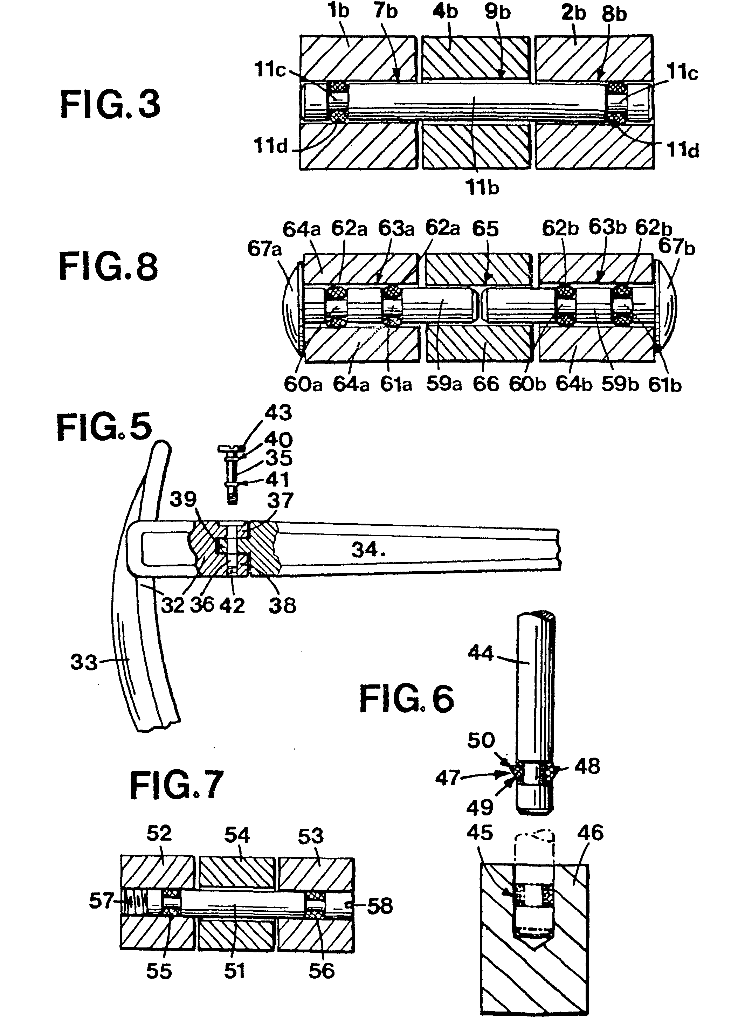

La fig. 3 représente une forme d'exécution du dispositif selon l'invention, comprenant des maillons tels que ceux représentés sur la fig. 1, mais assemblés par des moyens différents.

On voit en 1b, 2b des maillons identiques à 1 et 2 et en 4b un maillon identique à 4. Les trous 7b, 8b, 9b correspondent aux trous 7, 8, 9 de la fig. 1. Ils peuvent avoir tous le même diamètre ou, comme représenté, le trou 9 peut être très légèrement plus grand. Une goupille 11b est engagée dans les trous alignés 7b, 9b, 8b. Pour faciliter la compréhension, les jeux entre pièces ont été très fortement exagérés sur la fig. 3. Le diamètre de la goupille 11b est très légèrement inférieur au diamètre des trous 7b, 8b, pour permettre le glissement à frottement doux dans ces trous. Le diamètre légèrement plus grand du trou 9b permet un mouvement de rotation relatif aisé entre 4b et 11b.

La goupille 11b présente, à proximité de chacune de ses extrémités une partie de plus petit diamètre 11c, formant une gorge périphérique circulaire, dans laquelle est logé un anneau 11d du type connu sous le nom de O-Ring, en matière élastiquement déformable et incompressible telle que du caoutchouc ou un élastomère par exemple. A l'état libre, l'anneau 11d fait saillie hors de la gorge où il est logé. L'aire de la section transversale de cette gorge est au moins égale à celle de l'anneau. Ainsi, lorsque l'on engage la goupille 11b dans les trous 7b, 9b, 8b, l'anneau se déforme et s'efface dans la gorge et la goupille peut être glissée en place sans difficulté. Une fois en place, la goupille est assurée contre tout déplacement fortuit du fait que chaque anneau 11d, comprimé dans sa gorge, exerce une forte pression contre la paroi du trou 7b, respectivement 8b. La quantité dont l'anneau 11d fait saillie hors de la gorge, avant mise en place dans les maillons, doit être telle qu'on ne risque pas de cisailler cet anneau lors de cette mise en place. Le démontage ne pose pas de problème. Une pression axiale exercée à la main sur la goupille 11b, au moyen d'une tige rigide, suffit pour cette opération.

Dans la forme d'exécution selon la fig. 4, on voit deux éléments du même type que ceux selon la fig. 1, mais destinés à constituer, avec d'autres éléments identiques, un bracelet formé de cinq rangées parallèles de maillons rectangulaires massifs.

Ce dispositif comprend un premier élément, A, formant trois maillons identiques 12, 13, 14, reliés deux à deux de façon rigide par des ponts 15, 16.

Les maillons 12, 13, 14 sont percés de trois trous alignés et de même diamètre, 17, 18, 19, et symétriquement de trois autres trous alignés et de même diamètre 20, 21, 22.

Le dispositif selon la fig. 4 comprend un deuxième élément, B, formant deux maillons 23, 24 destinés à venir s'intercaler entre 12 et 13, d'une part, et 13 et 14, d'autre part. Un pont 25 relie de façon rigide les maillons 23 et 24. Des parties 26, 27, identiques au pont 25, sont prévues pour venir d'intercaler entre les maillons 12 et 14 respectivement et des maillons homologues d'un autre élément identique à A.

Des trous alignés 28, 29 et 30, 31 sont prévus dans les maillons 23, 24. Les trous 28, 29 sont destinés à venir en alignement avec les trous 20, 21, 22 de A, tandis que les trous 30, 31, sont destinés à venir en alignement avec des trous 17, 18, 19 d'un autre élément identique à A.

Tous ces trous ont le même diamètre et sont faits avec une tolérance courante, c'est-à-dire sans la précision exigée dans le cas décrit en référence à la fig. 1.

Pour l'assemblage des maillons A et B, on utilise une goupille 11e analogue à 11b de fig. 3, mais évidemment de longueur adaptée à la dimension du maillon A. Deux anneaux tels que 11d de fig. 3, engagés dans deux gorges de la goupille 11e, sont prévus, vers les extrémités de cette goupille. On a représenté ces anneaux en 11f sur la fig. 4.

Le fonctionnement de cette deuxième forme dexécution est pareil à celui de la première.

Dans une variante on pourrait prévoir un anneau tel que 11f dans la région médiane de la goupille, pour coopérer avec la paroi du trou médian 21. Dans une autre variante, on pourrait prévoir deux gorges et deux anneaux à chaque extrémité de la goupille.

Dans la forme d'exécution selon la fig. 5, le dispositif constitue une charnière de lunette. On voit en 32 le cadre de la lunette, en 33 un des verres, et en 34 une branche de la lunette. L'assemblage à charnière de la branche 34 sur le cadre 32 est assuré par une goupille 35 destinée à former pivot et traversant un trou 36 pratiqué à travers deux parties 37, 38 du cadre et une partie 39 de la branche 34, intercalée entre 37 et 38.

La goupille 35 présente deux gorges circulaires dans chacune desquelles est logé un anneau 40, 41 destiné à agir vis-à-vis de 37, 38, comme 11d vis-à-vis de 1b et 2b, c'est-à-dire pour s'opposer à ce que la goupille guitte sa position de travail sous l'effet de causes fortuites (chocs, vibrations, etc.).

Pour assurer le réglage, c'est-à-dire le degré de friction entre la branche 34 et le cadre, on prévoit avantageusement, comme représenté, que l'extrémité de la goupille 35 s'engageant dans 38 est filetée et coopère avec un filetage intérieur 42 correspondant de 38, tandis que l'extrémité opposée se présente comme une tête de vis 43. Ainsi, en agissant sur la tête 43, on peut serrer au degré désiré la partie 39 entre 37 et 38, de la façon habituelle. Les anneaux 40, 41, dans ce cas, s'opposent au dévissage sous l'effet d'une cause fortuite.

La forme d'exécution selon fig. 6 montre un dispositif dans lequel l'extrémité d'une goupille 44 est destinée à être engagée dans un trou borgne 45 d'une pièce 46. Pour empêcher le dégagement de la goupille sous l'effet d'une cause fortuite, il est prévu, vers l'extrémité de la goupille, une gorge circulaire 47 dans laquelle est disposé un anneau 48 analogue à ceux des exemples précédents mais qui, dans le cas de la fig. 6, présente une surface extérieure tronconique 49 dont la partie la plus extérieure est visible en 50. Le cône 49 pointe vers l'extrémité voisine de la goupille.

Pour l'assemblage de la goupille 44 et de la pièce 46, on force à fond la goupille dans ce trou. L'air ainsi comprimé dans ce trou oblige le cône 49 de l'anneau 48 à s'aplatir et s'échappe en partie hors du trou 45, jusqu'au moment où la goupille atteint la position finale représentée en traits mixtes. La pression sur la goupille cessant, l'anneau s'applique de façon étanche contre la paroi du trou et la goupille ne peut plus sortir du trou car le moindre mouvement de dégagement de la goupille d'un des trous borgnes produirait dans celui-ci un vide retenant la goupille en place.

Une telle construction pourrait être appliquée, par exemple, au cas d'un bracelet selon les fig. 3 ou 4, si on désirait que les trous dans les maillons marginaux et les goupilles ne soient pas apparents sur le bracelet. La pièce 46 serait alors un maillon marginal.

Il est évident que le trou borgne pourrait avantageusement être rempli d'un liquide avant assemblage. Le fonctionnement serait semblable à ce qui a été décrit.

La construction selon fig. 6 pourrait aussi être appliquée au cas d'un bracelet formé de maillons indépendants — tels que ceux selon fig. 1 ou 4, par exemple, mais où les ponts 3, 3a, 15, 16, 25 n'existeraient pas —. Dans ce cas, les maillons intermédiaires seraient maintenus en rangées par le fait que les maillons marginaux (1, 2 en fig. 1; 12, 14 en fig. 4) seraient maintenus à distance constante en raison du dispositif selon fig. 6, prévu à chacune de leurs extrémités. Tous les maillons intermédiaires pourraient alors tourner librement d'un certain angle autour de la goupille. Les maillons pourraient évidemment être d'une forme autre que rectangulaire. Les maillons intermédiaires pourraient ne pas être massifs mais en métal roulé.

Dans le cas d'un bracelet de type connu, par exemple tel que représenté sur la fig. 1, on pourrait prévoir, pour faciliter l'adaptation de la longueur du bracelet au tour de poignet d'une personne, quelques maillons de réglage réalisés selon la forme d'exécution représentée partiellement sur la fig. 7. Dans ce cas, la goupille 51 traverserait les maillons marginaux 52, 53 et un (dans une variante plus d'un) maillon intermédiaire 54. Des anneaux élastiques 55, 56, disposés respectivement dans des gorges de la goupille 51, coopèrent avec la paroi du trou des maillons 52, 53, comme dans le cas de la fig. 3. Mais la goupille 51 présente en plus les moyens suivants facilitant l'enlèvement ou l'adjonction de maillons de réglage: à une extrémité, la goupille présente un filetage 57 destiné à coopérer avec un filetage intérieur correspondant prévu sur une partie de la longueur du trou du maillon 52. A son extrémité opposée, la goupille présente un moyen d'actionnement en rotation, constitué par une fente 58 accessible sur le côté latéral apparent du maillon 53.

Dans ce cas les anneaux 55, 56, s'opposent à un mouvement accidentel de rotation de la goupille et à un déplacement relatif entre la goupille et le maillon 53, dans la direction axiale de la goupille.

On comprend facilement que les dispositifs décrits peuvent être adaptés à de nombreux types d'articulations et de charnières.

Dans les figures 1 à 5 et 7, on a représenté des constructions dans lesquelles on a une goupille constituant l'axe de pivotement entre deux pièces dans lesquelles elle est engagée, l'immobilisation axiale de cette goupille étant assurée par deux anneaux en matière élastique disposés chacun dans une rainure de la goupille se trouvant au voisinage de l'une des extrémités de celle-ci. La figure 8 représente une variante de la construction selon la fig. 3, dans laquelle, au lieu d'avoir une seule goupille par articulation, on a deux demi-goupilles coaxiales 59a, 59b disposées bout à bout. Dans ce cas, chaque goupille présente deux rainures. La goupille 59 présente deux rainures formées par deux parties de plus petit diamètre 60a, 61a, dans chacune desquelles est disposé un anneau élastique 62a coopérant tous deux à friction avec la paroi du trou 63a d'un maillon latéral 64; ce qui assure l'immobilisation relative de la demi-goupille 59a et du maillon 64a. L'extrémité de droite sur le dessin de la demi-goupille 59a est engagée avec un très léger jeu dans un trou cylindrique 65 d'un maillon médian 66. L'autre demi-goupille, 59b, est disposée de façon symétrique. Dans chacune de ses rainures formées par les deux parties 60b, 61b de plus petit diamètre, est disposé un anneau élastique 62b coopérant à friction avec la paroi d'un trou cyclindrique 63b d'un maillon latéral 64b symétrique de 64a. L'extrémité de gauche sur le dessin de la demi-goupille 59b est engagée avec un très léger jeu dans le trou cylindrique 65 du maillon médian 66 et forme, avec l'extrémité de droite de la demi-goupille 59a, un pivot d'articulation pour le maillon médian. 66. L'avantage de cette construction est de permettre de prévoir sur chacune des demi-goupilles 59a, 59b, une tête 67a, respectivement 67b, qui est appliquée contre le bord extérieur du maillon latéral respectif 64a, 64b, masquant ainsi la vue des demi-goupilles sur les côtés du bracelet. Les têtes 67a, 67b assurent la mise en place exacte des demi-goupilles dans les maillons latéraux et forment des éléments décoratifs sur les côtés du bracelet. De plus, elle facilitent l'extraction de ces demi-maillons au moyen d'une lame de canif par exemple, à des fins de réglage de la longueur du bracelet.

Une construction où chaque goupille est remplacée par deux demi-goupilles est évidemment applicable à des bracelets ayant plus de trois rangées parallèles de maillons. Il suffit que ces demi-goupilles soient bout à bout, avec un jeu de l'ordre d'un dixième de millimètre, lorsqu'elles sont en place dans le bracelet.

Bien que l'on ait représenté et décrit des exemples où les goupilles (ou demi-goupilles), les gorges de ces goupilles où sont disposés les anneaux élastiques, et la partie de la pièce avec laquelle coopèrent ces anneaux, sont de section transversale circulaire, on peut fort bien envisager des formes d'exécution de section elliptique, carrée, rectangulaire, etc., les trous des pièces avec lesquelles ces goupilles coopèrent étant alors de forme correspondante. Dans le cas de bracelets, cela permet d'envisager des maillons de formes variées.

## Revendications

1. Dispositif d'assemblage rotatif à goupille (11b) d'au moins deux pièces (1b, 2b, 4b) articulées entre elles, au moins une portion de la goupille (11b; 11e; 35; 44; 51; 59a, 59b) étant maintenue fermement dans un alésage (7b, 8b; 20, 21, 22; 36; 45; 63a, 63b) d'une première pièce (16, 26; A; 32; 46; 52, 53; 64a, 64b) et une autre portion de la goupille passant avec jeu par un passage (9b; 28, 29; 65) d'au moins une seconde pièce (4b; B; 34; 54; 66), caractérisé en ce que la goupille (11b; 11e; 35; 44; 51; 59a, 59b) présente au moins une gorge périphérique (11c; 47; 60a, 61a, 60b, 61b) circulaire de section pratiquement rectangulaire, dans laquelle est disposé un anneau continu (11d; 11f; 41; 48; 55, 56; 62a, 62b) en matière élastiquement déformable et pratiquement incompressible, anneau et gorge étant dimensionnés, en section transversale, pour qu'à l'état libre l'anneau fasse saillie hors de la gorge, tandis qu'en position de travail de la goupille, il se trouve déformé et pressé dans la gorge par la pression de l'alésage de la première desdites pièces, dans laquelle il coopère par friction avec cet alésage, pour empêcher tout déplacement relatif fortuit entre la goupille et cette première pièce.

2. Dispositif selon la revendication 1, caractérisé en ce que la goupille est formé de deux demi-goupilles coaxiales (59a, 59b), munies chacune d'une tête (67a, 67b), et présentant chacune deux gorges (60a, 61a; 60b, 61b) avec chacune un anneau (62a, 62b) en elle, ces deux anneaux (62a, 62b) coopérant avec une même pièce articulée (64a, 64b), tandis que l'extrémité de ces demi-goupilles (59a, 59b) opposée à celle munie d'une tête (67a, 67b), tournant librement dans au moins une autre (66) des pièces articulées (64a, 64b, 66).

3. Dispositif selon la revendication 1, caractérisé en ce qu'en position de travail, au moins une partie terminale de la goupille (44) qui présente une gorge (47) dans laquelle est disposé l'anneau (48) susdit, est engagée dans un trou borgne (45) de l'une desdites pièces (46), qui contient à demeure un fluide remplissant l'espace libre entre cette partie terminale avec l'anneau et les parois du trou borgne, pour s'opposer à l'extraction de cette partie terminale de la goupille hors de ce trou borgne (45).

4. Dispositif selon la revendication 3, caractérisé en ce que l'anneau (48) à l'état libre présente une surface conique (49) pointant vers le fond du trou borgne, pour faciliter l'évacuation hors du trou borgne du surplus de fluide hors de l'assemblage de la goupille (44) et de ladite pièce (46).

5. Dispositif selon la revendication 3 ou 4, caractérisé en ce que la goupille est engagée à chacune de ses extrémités dans un trou borgne d'un maillon appartenant à une rangée extérieure d'un bracelet, pour maintenir ces deux maillons à distance constante l'un de l'autre, cette goupille passant librement à travers des maillons intermédiaires indépendants les uns des autres et capables de tourner d'une certaine quantité autour de la goupille.

6. Dispositif selon la revendication 1 et pour bracelet, caractérisé en ce qu'au moins pour des maillons (52, 53, 54) prévus pour permettre par enlèvement le réglage de la longueur du bracelet au tour de poignet d'une personne, la goupille (51) susdite présente, à l'une de ses extrémités, un filetage (57) prévu pour coopérer avec un filetage intérieur d'un maillon marginal (52), tandis que son extrémité opposée présente un moyen (58) d'actionnement en rotation de cette goupille, qui est accessible sur le côté d'un maillon marginal opposé (53) du bracelet.

7. Dispositif selon la revendication 1 ou 2, caractérisé en ce que la goupille forme l'axe d'une charnière et présente au moins une gorge munie d'un anneau élastique (40, 41) coopérant avec la paroi d'un trou pratiqué dans une (32, 37, 38) des parties (32, 34) articulées de la charnière, pour immobiliser axialement et angulairement l'une par rapport à l'autre la goupille (35) et ladite partie articulée (32, 37, 38), l'autre partie (34, 39) étant rotative autour de la goupille (35) et maintenue fixe selon l'axe de la goupille, par ladite première partie (34, 37, 38).

8. Dispositif selon la revendication 7, caractérisé en ce que la goupille (35) forme l'axe de la charnière et présente, à l'une de ses extrémités, un filetage prévu pour coopérer avec un filetage (42) de l'une des pièces (32, 38) de la charnière, et à son autre extrémité un moyen d'actionnement (43) en rotation de la goupille, pour le réglage de la friction entre les pièces (32, 34) de la charnière par rotation de la goupille.

## Patentansprüche

1. Vorrichtung zum drehbaren Verbinden von wenigstens zwei Teilen (1b, 2b, 4b) die mit einem Stift (11b) gelenkig miteinander verbunden sind, wobei wenigstens ein Abschnitt des Stifts (11b, 11e, 35, 44, 51, 59a, 59b) in einer Bohrung (7b, 8b, 20, 21, 22, 36, 45, 63a, 63b) eines ersten Teils (16, 26, A, 32, 46, 52, 53, 64, 64b) festgehalten ist und ein anderer Abschnitt des Stifts mit Spiel durch einen Durchgang (9b, 28, 29, 65) wenigstens eines zweiten Teils (4b, 8, 34, 54, 66) verläuft, dadurch gekennzeichnet, dass der Stift (11b, 11e, 35, 44, 51, 59a, 59b) wenigstens eine äussere, kreisförmige Ringnute (11c, 47, 60a, 61b), mit praktisch rechteckigem Querschnitt aufweist, in welcher sich ein geschlossener Ring (11d, 11f, 41, 48, 55, 56, 62a, 62b) aus elastischem, deformierbarem, praktisch inkompressiblem Material befindet, wobei Nute und Ring im Querschnitt so dimensioniert sind, dass der Ring im unmontierten Zustand aus der Nute ragt, während er im montierten Zustand des Stifts deformiert und durch den Druck der Bohrung des genannten ersten Teils in die Nute gepresst ist, wobei er mit der Bohrung durch Reibung zusammenwirkt, um jede unerwünschte Verschiebung des Stiftes gegenüber diesem ersten Teil zu verhindern.

2. Vorrichtung nach Anspruch 1, dadurch gekennzeichnet, dass der Stift aus zwei koaxialen Halbstiften (59a, 59b) gebildet ist, von denen jeder einen Kopf (67a, 67b) und zwei Nuten (60a, 61a, 60b, 61b) mit je einem Ring (62a, 62b) aufweist, die mit einem gleichen Gelenkteil (64a, 64b) zusammenwirken und das Ende der beiden Halbstifte (59a, 59b), das jenem mit dem Kopf (67a, 67b) gegenüberliegt, frei in wenigstens einem andern (66) der Gelenkteile (63a, 64b, 66) dreht.

3. Vorrichtung nach Anspruch 1, dadurch gekennzeichnet, dass in der montierten Lage wenigstens das eine Ende des Stifts (44), das eine Nute (47) aufweist, in welcher der genannte Ring (48) angeordnet ist, in eine nichtdurchgehende Bohrung (45) eines der genannten Teile (46) eingreift, welche eine Flüssigkeit enthält, die den freien Raum in der Bohrung mit dem Ende des Stifts ausfüllt und die dem Herausziehen des Endes des Stifts aus dieser nichtdurchgehenden Bohrung (45) entgegenwirkt.

4. Vorrichtung nach Anspruch 3, dadurch gekennzeichnet, dass der Ring (48) in der freien Lage eine gegen das Innere der nichtdurchgehenden Bohrung konische Oberfläche (49) aufweist, um bei der Montage von Stift (44) und genanntem Teil (46) das Abfliessen der überflüssigen Flüssigkeit aus der Bohrung zu erleichtern.

5. Vorrichtung nach Anspruch 3 oder 4, dadurch gekennzeichnet, dass die beiden Ende des Stifts in ein nichtdurchgehendes Loch eines Glieds, das zur äussern Reihe eines Armbandes gehört, eingreifen, um die beiden Glieder in gleichbleibendem Abstand zu halten und dieser Stift frei durch dazwischenliegende Glieder verläuft, die voneinander unabhängig und in einem gewissen Bereich um den Stift drehbar sind.

6. Vorrichtung nach Anspruch 12, bei der es sich um ein Armband handelt, dadurch gekennzeichnet, dass wenigstens bei jenen Gliedern (52, 53, 54), die zum Anpassen der Länge des Armbandes an das Handgelenk einer Person entfernt werden können, die Stifte (51) an einem Ende ein Gewinde (57) aufweisen, das mit einem Innengewinde eines Randgliedes (52) zusammenwirken kann und dass das gegenüberliegende Ende ein Mittel (58) zum Drehen dieses Stifts aufweist, das von der Seite eines gegenüberliegenden Randglieds (53) des Armbandes zugänglich ist.

7. Vorrichtung nach Anspruch 1 oder 2, dadurch gekennzeichnet, dass der Stift die Drehachse eines Drehgelenks ist und wenigstens eine Nute mit einem elastischen Ring (40, 41) aufweist, der mit der Wandung eines Lochs (32, 37, 38), in einem der Teile (32, 34) des Drehgelenks zusammenwirkt, um den Stift (35) und den genannten Teil (32, 37, 38) axial und winkelmässig zu fixieren, und der andere Teil (34, 39) durch den erstgenannten Teil (34, 37, 78) in Richtung der Achse, um den Stift (35) drehbar, festgehalten ist.

8. Vorrichtung nach Anspruch 1, dadurch gekennzeichnet, dass der Stift (35) die Achse eines Drehgelenks bildet und an einem Ende ein Gewinde aufweist, welche mit einem Gewinde (42) in einem der Teile (32, 38) des Drehgelenks zusammenwirken kann, und das gegenüberliegende Ende ein Mittel (43) zum Drehen dieses Stifts aufweist, um die Reibung zwischen den Teilen (32, 34) des Drehgelenks durch Drehen des Stifts einzustellen.

## Claims

1. A rotatable fixing device with a pin (11b), comprising at least two parts (1b, 2b, 4b) joined to one another, at least one portion of the pin (11b, 11e, 35, 44, 51, 59a, 59b) being held firmly in a bore (7b, 8b, 20, 21, 22, 36, 45, 63a, 63b) in a first part (16, 26, A, 32, 46, 52, 53, 64a, 64b) and another portion of the pin passing, with play, through a passage (9b, 28, 29, 65) in at least one second part (4b, B, 34, 54, 66), characterized in that the pin (11b, 11e, 35, 44, 51, 59a, 59b) has at least one circular peripheral groove (11c, 47, 60a, 61a, 60b, 61b) of virtually rectangular section, in which a continuous ring (11d, 11f, 41, 48, 55, 56, 62a, 62b), made of an elastically deformable and virtually incompressible material, is arranged, the dimensions of the ring and groove in corss-section being such that, in the free state, the ring projects beyond the groove, whereas, in the working position of the pin, the ring is deformed and pressed into the groove by the pressure of the bore in the first of the said parts, in which it interacts with this bore, by friction, to prevent any accidental relative displacement between the pin and this first part.

2. The device according to claim 1, characterized in that the pin is formed of two coaxial half-pins (59a, 59b), each provided with a head (67a, 67b) and each having two grooves (60a, 61a, 60b, 61b) with a ring (62a, 62b) in each groove, these two rings (62a, 62b) interacting with the same joined part (64a, 64b), whereas the end of these half-pins (59a, 59b) which is opposite the one provided with a head (67a, 67b) rotates freely in at least one other (66) of the joined parts (64a, 64b, 66).

3. The device according to claim 1, characterized in that, in the working position, at least a terminal part of the pin (44), which has a groove (47) in which the above-mentioned ring (48) is arranged, is engaged in a blind hole (45) in one of the said parts (46), which permanently contains a fluid filling the free space between this terminal part, including the ring, and the walls of the blind hole, in order to oppose extraction of this terminal part of the pin from this blind hole (45).

4. The device according to claim 3, characterized in that, in the free state, the ring (48) has a conical surface (49) pointing towards the bottom of the blind hole, in order to facilitate expulsion of the surplus fluid out of the blind hole when the pin (44) and the said part (46) are fixed together.

5. The device according to claim 3 or 4, characterized in that the pin is engaged at each end in a blind hole in a link belonging to an outer row of a bracelet, in order to keep these two links at a constat distance apart, this pin passing freely through mutually independent, intermediate links capable of rotating around the pin to a certain extent.

6. The device according to claim 1 for a bracelet, characterized in that, at least for links (52, 53, 54) whose purpose is to enable the length of the bracelet around a person's wrist to be adjusted by their removal, the above-mentioned pin (51) has, at one end, a thread (57) for interacting with an internal thread on a marginal link (52), whereas its opposite end has a means (58) for rotating this pin, which is accessible at the side of an opposite marginal link (53) of the bracelet.

7. The device according to claim 1 or 2, characterized in that the pin forms the spindle of a hinge and has at least one groove provided with an elastic ring (40, 41) interacting with the wall of a hole made in one (32, 37, 38) of the joined parts (32, 34) of the hinge, in order to immobilize the pin (35) and the said joined part (32, 37, 38) axially and angularly relative to one another, the other part (34, 39) being able to rotate around the pin (35) and being held firmly along the axis of the pin by the said first part (32, 37, 38).

8. The device according to claim 7, characterized in that the pin (35) forms the spindle of the hinge and has, at one end, a thread for interacting with a thread (42) on one of the parts (32, 38) of the hinge, and, at its other end, a means (43) for rotating the pin, in order to adjust the friction between the parts (32, 34) of the hinge by rotation of the pin.

FIG.1

FIG.2

FIG.4

**FIG.3**

**1b** **7b** **4b** **9b** **2b** **8b**

**11c** **11c**

**11d** **11d**

**11b**

**FIG.8**

**64a** **62a** **63a** **62a** **65** **62b** **63b** **62b**

**67a** **67b**

**60a** **64a** **61a** **59a** **66** **60b** **64b** **59b** **61b**

**FIG.5**

**43**

**40**

**35**

**41**

**39** **37**

**34.**

**32 36 42** **38**

**33**

**FIG.6**

**44**

**50**

**47** **48**

**49**

**45** **46**

**FIG.7**

**52** **54** **53**

**57** **58**

**55** **51** **56**